# EUROPEAN PATENT APPLICATION

(11) **EP 4 733 121 A1**
(43) Date of publication of application: **29.04.2026**
(21) Application number: 24208267.5
(22) Date of filing: 23.10.2024
(51) Int. Cl.: B60L 15/20, B60L 58/25

(54) **SYSTEM AND METHOD FOR CONTROLLING A POWER USAGE OF A TRACTION ELECTRIC MACHINE**

(71) Applicant: Volvo Truck Corporation, 405 08 Göteborg (SE)
(72) Inventor: NORDHOLM, Linus, 436 40 ASKIM (SE); HOLMSTRÖM, Anders, 423 37 TORSLANDA (SE); SMIDEBRANT, Tobias, 415 51 GÖTEBORG (SE)
(74) Representative: Kransell & Wennborg KB

(57) **Abstract**

A computer system (100) for controlling a power usage of a traction electric machine (104) of a vehicle (202), the computer system comprising processing circuitry (102) configured to: predict a power profile (127) for an upcoming route section (204, 220); determine a thermal buffer (116) of a component or subsystem (118) of the vehicle (202) that is available before a thermal limit (115) is reached, the component or subsystem is associated with a usage restriction due to increased power usage of a driveline (119) of the vehicle, determine a constant power level (124) of the traction electric machine for the upcoming route section based on the thermal buffer and the predicted power profile for the upcoming route section that allows an increase in temperature of the component or subsystem without exceeding the thermal limit while travelling through the upcoming route section, and provide an output message (C) indicating the constant power level.

## Description

### TECHNICAL FIELD

The disclosure relates generally to electric machines of vehicles. In particular aspects, the disclosure relates to a system and method for controlling a power usage of a traction electric machine. The disclosure can be applied to heavy-duty vehicles, such as trucks, buses, and construction equipment, among other vehicle types. The disclosure can also be applied to passenger cars. Although the disclosure may be described with respect to a particular vehicle, the disclosure is not restricted to any particular vehicle.

### BACKGROUND

In modern vehicles, particularly those equipped with electric or hybrid powertrains, managing the thermal properties of components is critical to ensuring efficient operation. These components typically have thermal ratings which are not to be violated. When a vehicle operates in high-demand situations, such as climbing steep inclines, the available thermal buffer in the components is quickly consumed, leading to performance degradation and potential overheating.

Once the thermal buffer of a component is consumed, fluctuations in power output of the electric machine may occur, reducing the overall performance and stability of the vehicle, especially during prolonged high-load situations. For heavy-duty vehicles like trucks, which have a low power-to-mass ratio, this issue is particularly pronounced.

### SUMMARY

According to a first aspect of the disclosure, there is provided a computer system for controlling a power usage of a traction electric machine of a vehicle, the computer system comprising processing circuitry configured to: predict a power profile for an upcoming route section; determine a thermal buffer of a component or subsystem of the vehicle that is available before a thermal limit is reached, the component or subsystem is associated with a usage restriction due to increased power usage of a driveline of the vehicle, determine a constant power level of the traction electric machine for the upcoming route section based on the thermal buffer and the predicted power profile for the upcoming route section that allows an increase in temperature of the component or subsystem without exceeding the thermal limit while travelling through the upcoming route section, and provide an output message indicating the constant power level.

The first aspect of the disclosure may seek to optimize the use of thermal buffers of components of a vehicle. A technical benefit may include that a more even power output from the electric machine is provided, especially in high power demand situations. This further provides for more reliable availability of power from the electric machine for the driver to manage compared to with a more fluctuating availability of power. This can further improve experience and comfort occupants of the vehicle.

The component or subsystem is/are configured such that using the driveline of the vehicle will thermally affect the component or subsystem which are subject to a thermal constraint. That is, the component or subsystem should not violate a thermal rating and it is therefore possible to set a thermal limit, which may or may not be equal to the thermal rating. In preferred examples, the thermal limit is below the thermal rating. In one example, the driveline is one example of a subsystem. In one example, the electric machine is a component. The electric machine may be considered a component of the driveline subsystem.

The constant power level allows for a small deviation but is substantially constant. Especially, if output to a drive line, the driver should experience the available power as being substantially constant or even.

Power usage is herein interpreted as bidirectional power usage meaning that it includes both power output to the driveline and power generated by the electric machine during for example regenerative braking that produces energy that is stored in an electrical energy storage system.

The upcoming route section is a part or portion of the road stretch ahead of the vehicle. The characteristics such as topography and slopes of the upcoming route section may be determined from map data or GPS data. Furthermore, the upcoming route section may further be determined from a machine learning algorithm, or from user input.

The upcoming route section is considered the horizon for which the constant power level is determined. The upcoming route section may be determined based on a time horizon. In other examples, the upcoming route section may be a distance horizon.

Optionally in some examples, including in at least one preferred example, the processing circuitry may be further configured to: acquire a thermal model of the component or subsystem of the vehicle that associates power usage of the traction electric machine with thermal increase of the component or subsystem, use the thermal model to determine the constant power level. A technical benefit may include that an accurate relation between power usage and thermal increase is provided thereby enabling more precise determination of the constant power level.

Optionally in some examples, including in at least one preferred example, the thermal limit may be first thermal limit, wherein the processing circuitry may be further configured to: determine the constant power level such that a predetermined second thermal limit lower than the first thermal limit is reached at the end of the route section. A technical benefit may include that consecutive route sections may be considered simultaneously. For example, two very different uphill slopes, or an uphill slope followed by a downhill may be jointly considered. That is, the limit for the first route section is set to account for the need of thermal buffer in the second, consecutive, route section. In this way, a more efficient use of the thermal buffers is enabled. It may further allow for setting more conservative second thermal limits than a more aggressive first thermal limit.

Optionally in some examples, including in at least one preferred example, the processing circuitry may be further configured to: determine the constant power level such that the thermal limit is reached at or near the end of the route section. In this way, the constant power level is advantageously maximized.

Optionally in some examples, including in at least one preferred example, the processing circuitry may be further configured to: receive topography data of the upcoming route section or multiple consecutive upcoming route sections having different slopes, wherein a constant power level of the traction electric machine is determined for each of the upcoming route sections. Breaking down the road ahead in multiple sections enables a more accurate calculation of thermal buffers available since the multiple sections may each have a more constant slope compared to the entire accumulated road. In other words, the constant power levels are determined with better spatial resolution for the upcoming route. The constant power level for one upcoming route section is determined also considering the other upcoming route sections such that there is sufficient thermal buffer available for also the other upcoming route sections to maintain a constant power level.

Optionally in some examples, including in at least one preferred example, the processing circuitry may be further configured to: set a maximum power limit for the vehicle based on the output message. This advantageously ensures that the thermal limit is not violated.

Optionally in some examples, including in at least one preferred example, the processing circuitry may be further configured to: provide a message to a user interface to inform an operator of constant power level available for the upcoming route section. A technical benefit is that the operator is informed that the available power for an upcoming route section may be limited such that the operator can better plan his/her driving.

Optionally in some examples, including in at least one preferred example, the processing circuitry may be further configured to: control the traction electric machine to operate at or below the constant power level throughout at least a majority of the upcoming route section. In other words, some power surges exceeding the constant power level is allowed, but the electric machine should operate below the constant power level through most of the upcoming route section. This still ensures that the thermal limit is not violated, especially if time periods below the constant power limit are also included.

Optionally in some examples, including in at least one preferred example, the processing circuitry may be further configured to: control the traction electric machine to operate at or below the constant power level throughout the upcoming route section. This advantageously ensures that the thermal limit is not violated.

There is further provided a vehicle comprising the computer system.

According to a second aspect of the disclosure, there is provided a computer-implemented method for controlling a power usage of a traction electric machine of a vehicle, comprising: predicting, by processing circuitry of a computer system, a power profile for an upcoming route section, determining, by the processing circuitry, a thermal buffer of a component or subsystem of the vehicle that is available before a thermal limit is reached, the component or subsystem is associated with a usage restriction due to increased power usage of a driveline of the vehicle, determining, by the processing circuitry, a constant power level of the traction electric machine for the upcoming route section based on the thermal buffer and the predicted power profile for the upcoming route section that allows an increase in temperature of the component or subsystem without exceeding the thermal limit while travelling through the upcoming route section, and providing, by the processing circuitry, an output message indicating the constant power level.

The second aspect of the disclosure may seek to optimize the use of thermal buffers of components of a vehicle. A technical benefit may include that a more even power output from the electric machine is provided, especially in high power demand situations. This further provides for more reliable availability of power from the electric machine for the driver to manage compared to more fluctuating availability of power. This can further improve experience and comfort for occupants of the vehicle.

Optionally in some examples, including in at least one preferred example, the method may comprise: acquiring, by the processing circuitry, a thermal model of the component or subsystem of the vehicle that associates power usage of the traction electric machine with thermal increase of the component or subsystem, use the thermal model to determine the constant power level. A technical benefit may include that an accurate relation between power usage and thermal increase is provided thereby enabling more precise determination of the constant power level.

Optionally in some examples, including in at least one preferred example, the thermal limit may be first thermal limit, wherein the method further comprises; determining, by the processing circuitry, the constant power level such that a predetermined second thermal limit lower than the first thermal limit is reached at the end of the route section. A technical benefit may include that consecutive route sections may be considered simultaneously. For example, two very different uphill slopes, or an uphill slope followed by a downhill may be jointly considered. In this way, a more efficient use of the thermal buffers is enabled. It may further allow for setting more conservative thermal limits.

Optionally in some examples, including in at least one preferred example, the method may further comprise: determining, by the processing circuitry, the constant power level such that the thermal limit is reached at or near the end of the route section. In this way, the constant power level is advantageously maximized.

Optionally in some examples, including in at least one preferred example, the method may further comprise: receiving, by the processing circuitry, topography data of the upcoming route section or multiple consecutive upcoming route sections having different slopes, wherein a constant power level of the traction electric machine is determined for each of the upcoming route sections. Breaking down the road ahead in multiple sections enables a more accurate calculation of thermal buffers available since the multiple sections may each have a more constant slope compared to the entire accumulated road. In other words, the constant power levels are determined with better spatial resolution for the upcoming route.

Optionally in some examples, including in at least one preferred example, the method may further comprise: setting, by the processing circuitry, a maximum power limit for the vehicle based on the output message. This advantageously ensures that the thermal limit is not violated.

Optionally in some examples, including in at least one preferred example, the method may further comprise: controlling, by the processing circuitry, the traction electric machine to operate at or below the constant power level throughout at least a majority of the upcoming route section. In other words, some power surges exceeding the constant power level are allowed, but the electric machine should operate below the constant power level through most of the upcoming route section. This still ensures that the thermal limit is not violated, especially if time periods below the constant power limit are also used.

Optionally in some examples, including in at least one preferred example, the method may further comprise: controlling, by the processing circuitry, the traction electric machine to operate at or below the constant power level throughout the upcoming route section. This advantageously ensures that the thermal limit is not violated.

There is further provided a computer program product comprising program code for performing, when executed by the processing circuitry, the method of any of the herein disclosed examples.

There is further provided a non-transitory computer-readable storage medium comprising instructions, which when executed by the processing circuitry, cause the processing circuitry to perform the method of any of the herein disclosed examples.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

**FIG. 1** is an exemplary system diagram of a computer system for controlling a power usage of a traction electric machine of a vehicle according to an example.
**FIG. 2A** illustrates power and temperature graphs for a vehicle approaching and travelling through an upcoming route section in the form of an uphill road section according to an example.
**FIG. 2B** illustrates power and temperature graphs for a vehicle approaching and travelling through an upcoming route section in the form of an uphill road section followed by a downhill route section according to an example.
**FIG.** 3 illustrates a schematic functional overview of a system to control a power usage of a traction electric machine of a vehicle according to an example.
**FIG.** 4 is a flow-chart of a method to control a power usage of a traction electric machine of a vehicle according to an example.
**FIG.** 5 is another view of FIG. 1, according to an example.
**FIG.** 6 is a flow-chart of a method to control a power usage of a traction electric machine of a vehicle according to an example.
**FIG.** 7 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

In vehicles with electric or hybrid powertrains, the thermal management of components, particularly related to a driveline of the vehicles, presents significant challenges during high-demand operational conditions. When the vehicle is subjected to tasks requiring substantial power feedthrough, such as climbing steep inclines or during regenerative braking, the thermal capacity of the electric machine or other components or subsystems is quickly consumed, leading to a sharp rise in temperature. This necessitates reducing power output to avoid surpassing thermal limits, which in turn results in inconsistent performance and reduced efficiency of the electric machine.

Current thermal management systems typically react to real-time conditions without taking future demands into account. These systems fail to anticipate changes in power requirements based on upcoming driving conditions, such as an extended uphill route. As a result, the thermal buffer is exhausted early in the high-demand scenario, forcing a reduction in power output during critical moments. This reactive approach leads to suboptimal utilization of the thermal buffer and contributes to performance fluctuations, decreased vehicle stability, and a less predictable driving experience, particularly in heavy-duty vehicles like trucks.

The examples described herein address how to predictively manage the thermal capacity of components in a way that may provide for a consistent power output of the electric machine over extended periods of high demand, without exceeding thermal limits.

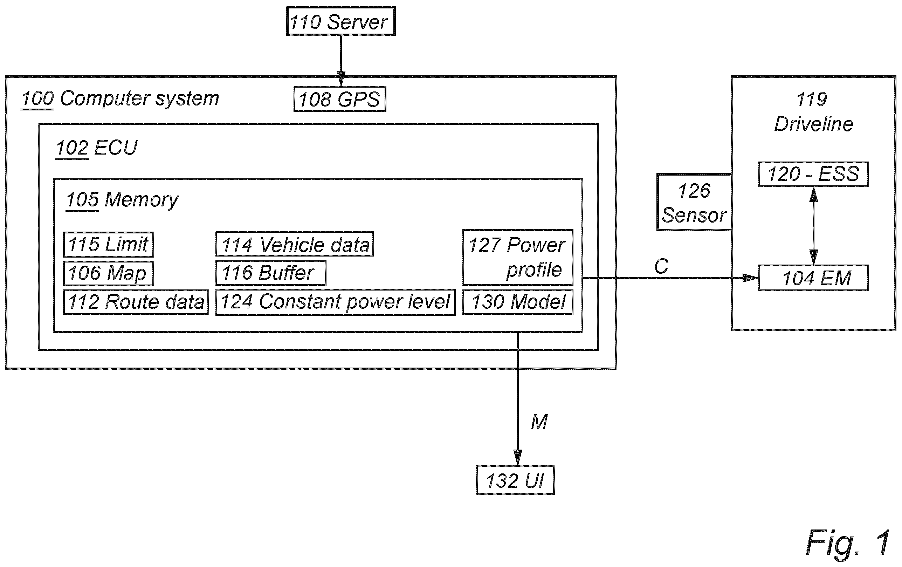

**FIG. 1** is an exemplary system diagram of a computer system 100 for controlling a power usage of a traction electric machine 104 of a vehicle according to an example.

The computer system 100 comprises processing circuitry 102 configured to perform various steps described herein. The processing circuitry 102, an electronic control unit ECU, has access to a non-transitory memory storage device 105 and to map data 106 stored on the memory 105 or accessible through a global position system, GPS 108 of the vehicle.

The processing circuitry 102 retrieves route data 112 either from the GPS 108, from the map data 106 stored in the memory 105, or from an external memory. The route data 112 includes road attributes such as topography of upcoming route sections ahead of the vehicle and optionally also speed limits. The topography includes at least information of slopes of the upcoming route sections, for example provided as percentage of slope or angle of slope, for both uphill sections and downhill sections. The length or distance of the upcoming route sections may vary and depends on the resolution of the route data, generally given by the resolution of the map 106 or the GPS data.

An upcoming route section is ahead of the vehicle along its presently travelled path. The upcoming route section is preferably immediately ahead of the vehicle such as from a present position to a position a few kilometers ahead of the vehicle, although a few hundred meters are also applicable. Alternatively, the upcoming route section is until the next substantial slope change ahead of the vehicle, or at when the slope of the road ahead of the vehicles reaches a predetermined threshold, or when a speed limit of the road changes, or when the slope changes sign (going from uphill to downhill or vice versa).

The processing circuitry 102 is configured to predict a power profile 127 for the upcoming route section. The processing circuitry 102 calculates the power profile based on attributes of the upcoming route section such as the slope, length, and/or altitude difference of the upcoming route section. In addition, vehicle data 114 such as its weight including cargo, rolling resistance, and air resistance may be used in the prediction of the power profile 127. The power profile describes the power required to travel the upcoming route section as a function of distance provided a desired speed, such as the legal speed limit of the upcoming route section.

The processing circuitry 102 further determines a thermal buffer 116 of a component 104 or subsystem 119 of the vehicle that is available before a thermal limit is reached. The component 104 or subsystem 119 is associated with a usage restriction due to increased power usage of a driveline of the vehicle. That is, the component or subsystem 119 heats up when the driveline of the vehicle increases its power usage. It is envisaged that the power usage may be a power output of the electric machine 104. However, it is also envisaged that the power usage may be power input such as during regenerative braking for charging of an electrical energy storage system, ESS, 120. In other words, the power usage may be considered a bidirectional power usage.

In this example, an component is exemplified as the electric machine 104. A subsystem 119 may be driveline. In other words, the driveline 119 may itself be a subsystem associated with a usage restriction due to its own increased power usage. The electric machine 104 may be a component associated with a usage restriction due to its own increased power usage and may be considered a component 104 of the driveline subsystem 119.

Another example of a component or subsystem is an energy dissipation system configured to dissipate energy from the driveline.

The electrical energy storage system 120 includes electrical energy storage cells arranged in series and/or parallel in modules and packs and includes a suitable chemistry such as based on Li-Ion technology. The electrical energy storage system 120 can provide electrical energy to the electric machine 104 and can be charged regeneratively from the electric machine 104, for example when travelling downhill.

The thermal buffer 116 indicates an available increase in temperature from a present temperature until the thermal limit is reached. The present temperature may be measured using temperature sensors 126 or it may be estimated using models. The thermal buffer is further takes into account the thermal mass of the component 104 or subsystem 119. A larger component or subsystem generally provides a larger thermal buffer compared to a smaller the component or subsystem provided equal increase in temperature.

The processing circuitry 102 is configured to determine a constant power level 124 of the traction electric machine 104 for the upcoming route section based on the thermal buffer 116 and the predicted power profile 127 for the upcoming route section. The constant power level 124 is at a level that allows an increase in temperature of the component 104 or subsystem 119 without exceeding the thermal limit while travelling through the upcoming route section. In other words, as long as the constant power level 124 is not exceeded, the thermal limit 115 of the component 104 or subsystem 119 is not violated.

The processing circuitry 102 provides an output message C indicating the constant power level 124.

The constant power level 124 may be determined or calculated in various ways. In one example, the processing circuitry 102 is configured to acquire a thermal model 130 of the component 104 or subsystem 119 of the vehicle. The thermal model 130 associates power usage of the traction electric machine 104 with thermal increase of the component 104 or subsystem 119. The processing circuitry 102 is configured to use the thermal model 130 to determine the constant power level 124.

The thermal model 130 may be a machine learning algorithm, a mathematical model, or even a look-up table of predetermined relations between increase in power usage and thermal increase of the component 104 or subsystem 119. Such predetermined data may be either modelled or empirically determined. The thermal model 130 may further describe the functional ability of the component 104 or subsystem 119 when subject to increase in temperature. That is, the model 130 may provide information for the available power window given a temperature of the component 104 or subsystem 119.

In some examples, the processing circuitry 102 is configured to provide a further message M to a user interface 132 to inform an operator of the constant power level 124 available for the upcoming route section. The user interface 132 may be a visual interface such as a display in a vehicle cab, or an auditory user interface providing auditorial information to the operator of the vehicle, e.g, via a speaker in the vehicle cab. This allows the operator to be aware of the constant power level as the vehicle is approaching the upcoming route section.

The processing circuitry 102 may be further configured to set a maximum power limit for the vehicle based on the output message C. That is, the electric machine 104 will not be allowed to exceed the constant power level during the upcoming route section.

In other examples, the processing circuitry 102 may be further configured to control the traction electric machine 104 to operate at or below the constant power level throughout at least a majority of the upcoming route section. That is, the power is allowed to exceed the constant power level during short time periods, but still such that the thermal limit is not exceeded during the route section.

In another example, the processing circuitry 102 may be configured to control the traction electric machine 104 to operate at or below the constant power level 124 throughout the upcoming route section.

The constant power level 124 may be determined such that the thermal limit is reached at or near the end of the route section. That is, the temperature of the component 104 or subsystem 119 is allowed to increase steadily, or at a constant rate, such that the thermal limit is reached at the end of the upcoming route section. This allows for maximizing the constant power level 124.

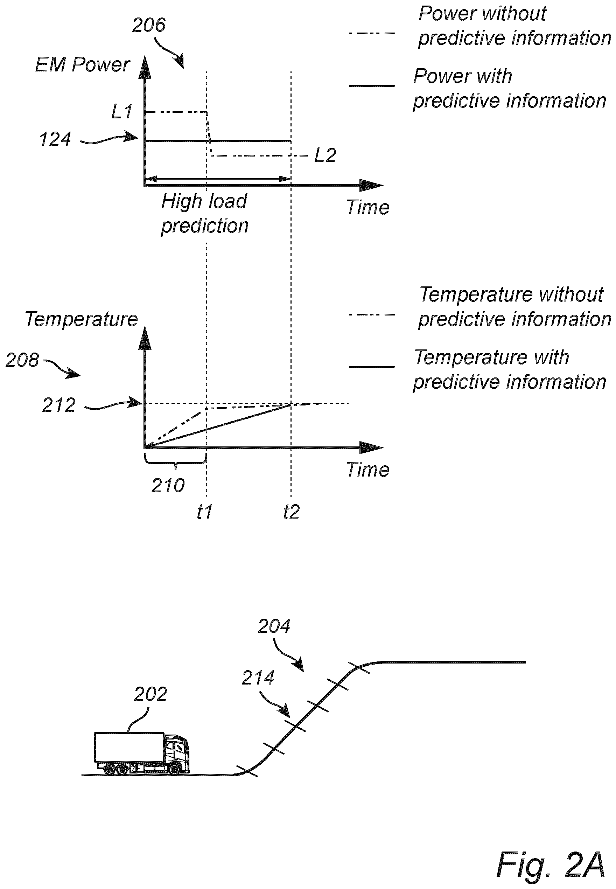

**FIG. 2A** illustrates power and temperature graphs for a vehicle 202 approaching and travelling through an upcoming route section in the form of an uphill road section 204. The graph 206 illustrates the output power of the electric machine 104 of the vehicle 202 versus time as the vehicle travels through the uphill road section 204. The graph 208 illustrates the temperature of a component or subsystem 118 of the vehicle 202 as it travels through the uphill road section 204. The dashed curves illustrate a typical behavior for a prior art system that does not consider the properties of the upcoming route section 204. For the prior art system (dashed), the output power in graph 206 is allowed to be relatively high, L1 for a short time period 210, which causes a temperature rise (graph 208) in the component or subsystem and consequently a thermal limit 212 is almost reached at time t1 before the uphill slope has been completed. This increase in heat forces the electric machine to reduce its output power to a relatively lower level, L2, to avoid overheating of the component or subsystem. The component or subsystem may be the driveline 119 of the vehicle or the electric machine 104 of the vehicle. That is, the increased temperature of the electric machine might cause lowered power ability of the electric machine (component) or its subsystem (driveline) or other subsystems that have dependencies to electric machine/driveline subsystem.

With the herein in presented examples, represented by the solid curves in the graphs 206 and 208, the output power is kept at or near the constant power level 124, in the example throughout the uphill road section 204. The temperature, in graph 208, of the component or subsystem increases at a nearly constant rate but does not exceed the thermal limit 212. In this example, the constant power level is determined such that the thermal limit 212 is nearly reached at the end of the route section 204 at time t2. Note here that the thermal limit 212 is preferably not at a maximum thermal rating of the component or subsystem to allow for a margin. In some examples, a second thermal limit below the first thermal limit may be set to ensure an even more conservative prediction. This makes the constant power level lower.

The entire upcoming route section 204 may be split into multiple sub portions 212. The size of the sub portions 214 depends on the resolution of the map data. The power required for each sub-portion 214 can be determined which provides for an accurate predicted power profile for the entire upcoming route section 204. The constant power level is determined for the entire route section 204 by considering all the sub-portions jointly. Furthermore, a constant power level 124 of the traction electric machine 104 can be determined for each of the upcoming sub-portions 214 of route sections, where the constant power level will depend on the slope of the upcoming sub-portions 214 of route sections. Thereby, a more accurate overall determination of the constant power level can be made.

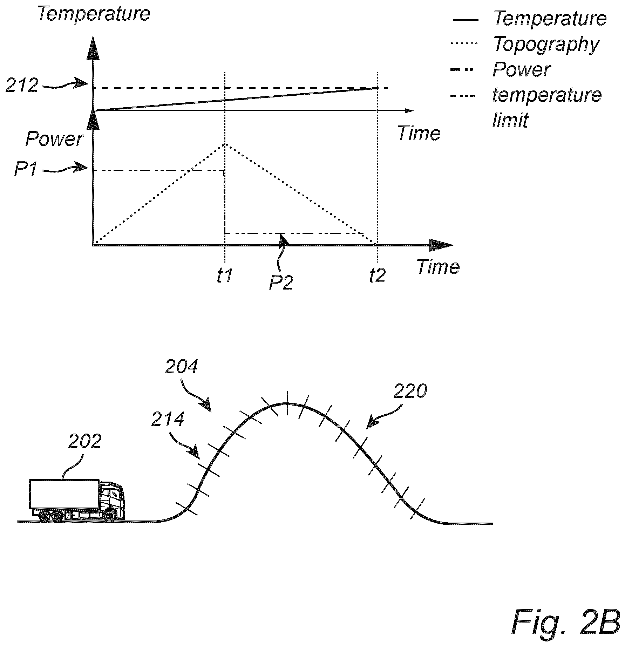

**FIG. 2B** illustrates power and temperature graphs for a vehicle approaching and travelling through an upcoming route section in the form of an uphill road section 204 followed by a downhill route section 220. The processing circuitry 102 may thus receive topography data of multiple consecutive upcoming route sections having different road attributes such as slopes, and/or speed limits. In this case, the processing circuitry 102 may consider the upcoming downhill section 220 when determining the constant power level 124 for the initial uphill road section 204.

For example, the processing circuitry may consider multiple of the upcoming sub-portions 214 simultaneously such that the thermal limit is not reached during the travelling through the upcoming route sections 204 and 220.

As a further example, the processing circuitry 102 may set a second thermal limit for the initial uphill road section 204 that is lower than the thermal limit that it would set for the initial uphill road section 204 alone. The processing circuitry 102 can then use a higher thermal limit for the subsequent downhill road section 220. That is, the processing circuitry 102 may account for the downhill section 220 when determining the constant power level for the initial uphill road section 204.

In the example shown in fig. 2B, during the uphill road section 204 that lasts until time T1, the electric machine 104 may use a determined constant power level P1 to propel the vehicle 202 up the slope 204, this causes heating of the component or subsystem such as an electrical energy storage system 120 of the vehicle 202. When the vehicle reaches the top and starts travelling downhill at time T1 until time T2, regenerative braking for charging of the electrical energy storage system 120, here exemplified as being performed with a determined constant power level P2 from the electric machine 104, cause continued heating of the electrical energy storage system 120, but not such that the temperature violates the thermal limit 212. The power P2 is here the power of the electric machine operating to charge the ESS 120 of the vehicle. In other words, initially the electric machine 104 operates in one direction to output power to the driveline 119 for climbing the first upcoming route section 204, subsequently, the electric machine 104 operates in the other direction to generate power for charging the ESS 120 of the vehicle 202. That is, power usage is herein considered bidirectional power usage. The ESS 120 of the vehicle 202 may thus be considered a component that heats due to usage of the driveline according to examples.

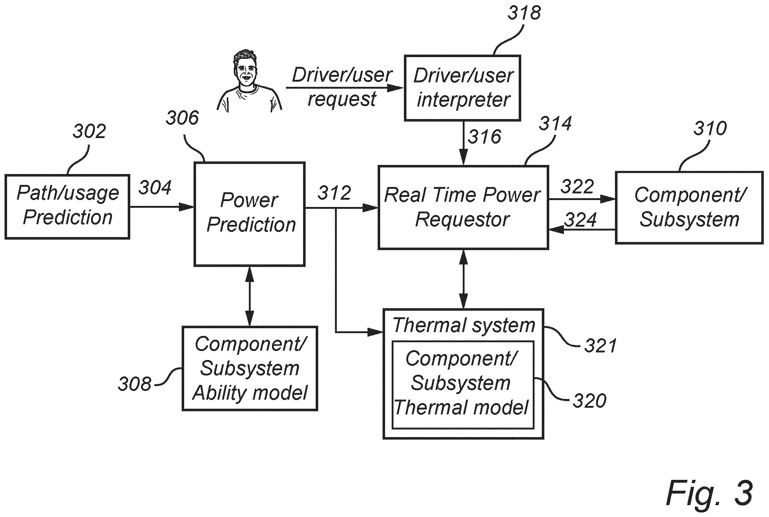

**FIG.** 3 illustrates a schematic functional overview of a system 300 to control a power usage of a traction electric machine of a vehicle according to an example. The system 300 includes a path prediction module 302 configured to predict or in other ways determine an upcoming path 304, for example using map data or GPS data. The path data 304 includes a topography of the path such as slope but also speed limits of the path.

The system 300 comprises a power prediction module 306 configured to determine or predict a power profile for the upcoming route section 304. The prediction is further based on an ability model 308 of the component or subsystem, which in this case is an electric machine 310. The ability model 308 describes the ability for example the electric machine 310 to provide electric power for a time duration. This model 308 also provides a relation between power usage of the traction electric machine and thermal increase of the component or subsystem.

The power prediction module 306 is configured to calculate the constant power level that ensures that the thermal limit of the component or subsystem is not exceeded during the upcoming route section using the model 308 of the component or subsystem 310.

The predicted constant power level 312 is forwarded to a real-time power requestor 314 which is configured to send power or torque or speed requests to the electric machine 310 based on the constant power level and/or based on a driver/user request 316. The real-time power requestor 314 is configured to receive the driver/user request 316 via a driver/user interpreter 318 configured to translate the input from a driver to readable commands for the real-time power requestor 314.

The real-time power requestor 314 is further configured to provide data indicating the constant power level to a thermal system 321 configured to cool the component or subsystem. This provides the thermal system with the ability to prepare for cooling of the component or subsystem based on a thermal model 320 thereof. Determining the thermal buffer may further be based on the cooling capacity of the thermal system 321 to cool the component or subsystem.

The real-time power requestor 314 is further configured to send power or torque or speed requests 322 to the electric machine 310 based on the constant power level. The real-time power requestor 314 may further receive data 324 indicating the present state of the electric machine 310.

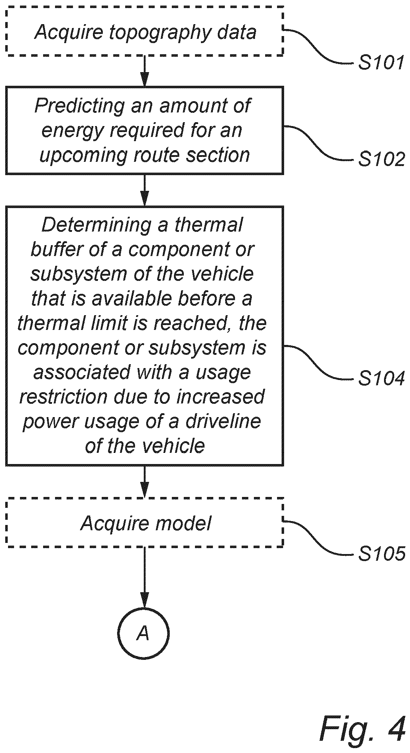

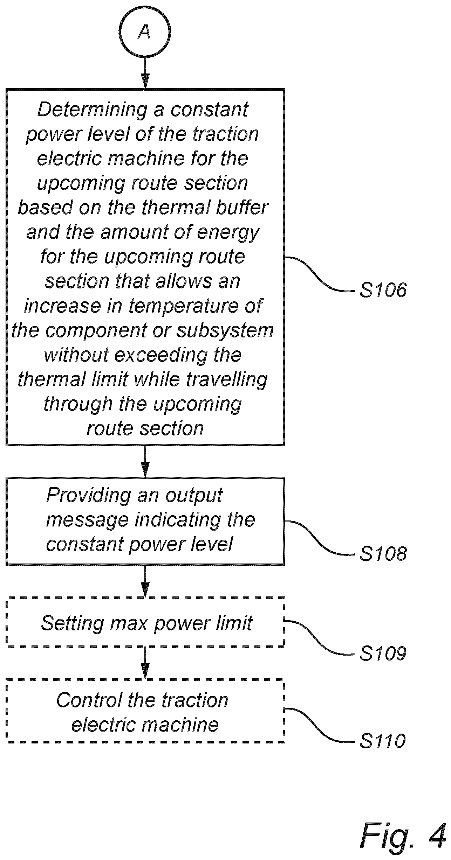

**FIG. 4** is a flow-chart of a method to control a power usage of a traction electric machine of a vehicle according to an example.

In step S 102, predicting, by processing circuitry 102 of a computer system 100, an amount of energy required for an upcoming route section 204, 220. The upcoming route section may include sub-sections of varying slopes, for which the method may consider multiple sub-sections simultaneously. For example, the processing circuitry may have received, in step S101, topography data of one upcoming route section 204 or multiple consecutive upcoming route sections 204, 220 having different slopes.

In step S104, determining, by the processing circuitry 102, a thermal buffer 116 of a component 104 or subsystem 119 of the vehicle 202 that is available before a thermal limit 115 is reached. The component 104 or subsystem 119 is associated with a usage restriction due to increased power usage of a driveline of the vehicle. In other words, the component 104 or subsystem 119 heats as a result of using the electric machine to power the driveline 119.

Note that connector A connects steps on first page of fig 4 with steps on the second page of fig. 4.

In step S106, determining, by the processing circuitry 102, a constant power level 124 of the traction electric machine 104 for the upcoming route section 113 based on the thermal buffer 116 and the amount of energy for the upcoming route section that allows an increase in temperature of the component or subsystem without exceeding the thermal limit 115 while travelling through the upcoming route section.

In step S108, providing, by the processing circuitry, an output message indicating the constant power level 124.

In some examples, the method comprises acquiring, in step S105, by the processing circuitry 102, a thermal model of the component or subsystem 118 of the vehicle that associates power usage of the traction electric machine with thermal increase of the component or subsystem. The processing circuitry 102 uses the model in step S108 to determine the constant power level.

In optional examples, the method includes a step S109 of setting, by the processing circuitry 102, a maximum power limit for the vehicle based on the output message.

In some examples, the method includes a step S 110 of controlling, by the processing circuitry 102, the traction electric machine 104 to operate at or below the constant power level 124 throughout at least a majority of the upcoming route section. In other examples the traction electric machine is controlled in step S110 to operate at or below the constant power level throughout the upcoming route section.

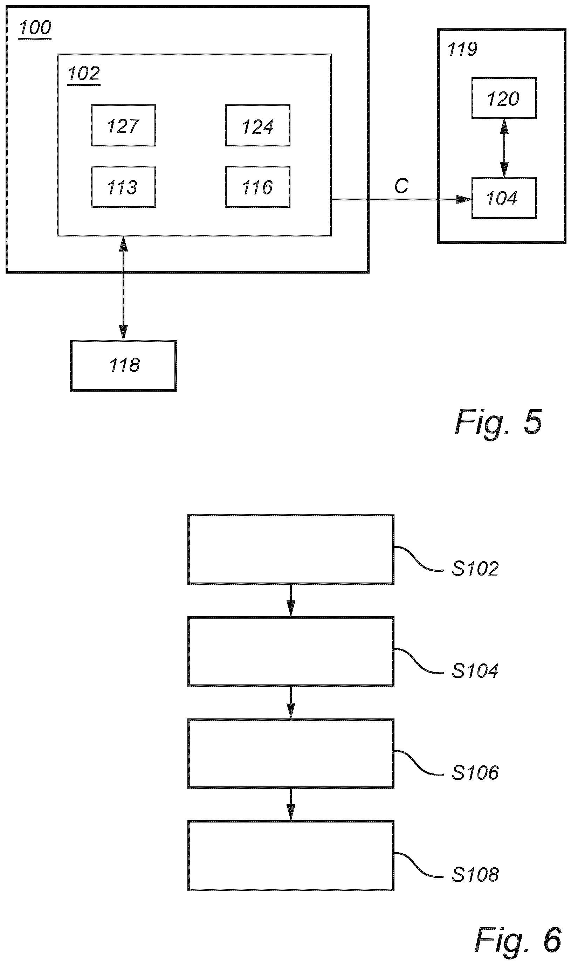

**FIG. 5** is another view of **FIG. 1****,** according to an example. FIG 5 illustrates a computer system 100 for controlling a power usage of a traction electric machine 104 of a vehicle, the computer system comprising processing circuitry configured to: predict power profile 127 for an upcoming route section 113; determine a thermal buffer 116 of a component or subsystem 118 of the vehicle that is available before a thermal limit is reached, the component or subsystem 118 is associated with a usage restriction due to increased power usage of a driveline 119 of the vehicle, determine a constant power level 124 of the traction electric machine 104 for the upcoming route section based on the thermal buffer 124 and on the power profile 127 for the upcoming route section that allows an increase in temperature of the component or subsystem 118 without exceeding the thermal limit while travelling through the upcoming route section 112, and provide an output message C indicating the constant power level.

**FIG.** 6 is a flow chart of a method to control a power usage of a traction electric machine of a vehicle according to an example.

The method comprises predicting, in step S102, by processing circuitry of a computer system, a power profile for an upcoming route section, determining in step S104, by the processing circuitry, a thermal buffer of a component or subsystem of the vehicle that is available before a thermal limit is reached, the component or subsystem is associated with a usage restriction due to increased power usage of a driveline of the vehicle, determining, in step S106, by the processing circuitry, a constant power level of the traction electric machine for the upcoming route section based on the thermal buffer and on the power profile for the upcoming route section that allows an increase in temperature of the component or subsystem without exceeding the thermal limit while travelling through the upcoming route section, and providing, in step S108, by the processing circuitry, an output message indicating the constant power level.

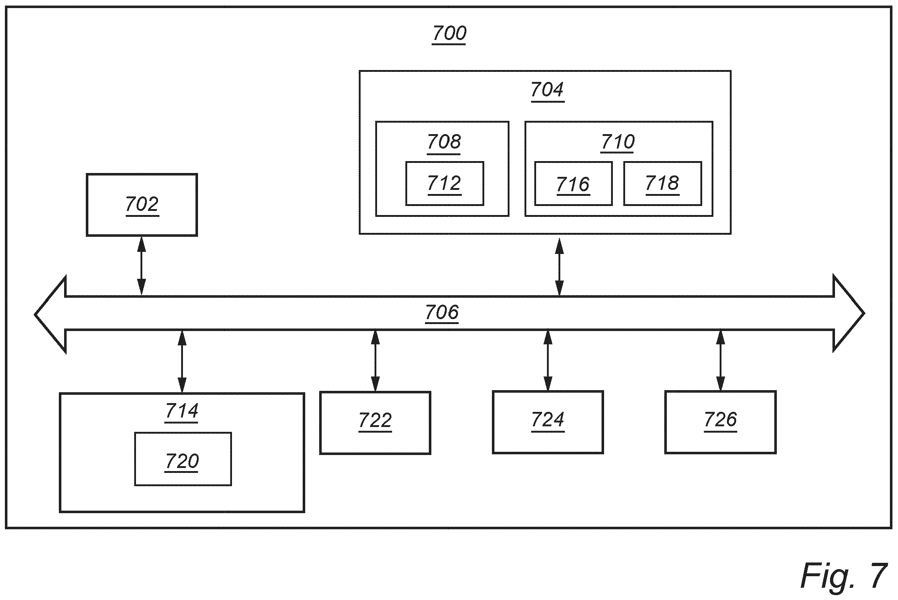

**FIG. 7** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 700 may comprise at least one computing device or electronic device capable of including firmware, hardware, and/or executing software instructions to implement the functionality described herein. The computer system 700 may include processing circuitry 702 (e.g., processing circuitry including one or more processor devices or control units), a memory 704, and a system bus 706. The computer system 700 may include at least one computing device having the processing circuitry 702. The system bus 706 provides an interface for system components including, but not limited to, the memory 704 and the processing circuitry 702. The processing circuitry 702 may include any number of hardware components for conducting data or signal processing or for executing computer code stored in memory 704. The processing circuitry 702 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 702 may further include computer executable code that controls operation of the programmable device.

The system bus 706 may be any of several types of bus structures that may further interconnect to a memory bus (with or without a memory controller), a peripheral bus, and/or a local bus using any of a variety of bus architectures. The memory 704 may be one or more devices for storing data and/or computer code for completing or facilitating methods described herein. The memory 704 may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device
interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system for controlling a power usage of a traction electric machine of a vehicle, the computer system comprising processing circuitry configured to: predict a power profile for an upcoming route section; determine a thermal buffer of a component or subsystem of the vehicle that is available before a thermal limit is reached, the component or subsystem is associated with a usage restriction due to increased power usage of a driveline of the vehicle, determine a constant power level of the traction electric machine for the upcoming route section based on the thermal buffer and the predicted power profile for the upcoming route section that allows an increase in temperature of the component or subsystem without exceeding the thermal limit while travelling through the upcoming route section, and provide an output message indicating the constant power level.

Example 2: The computer system of claim 1, wherein the processing circuitry is further configured to: acquire a thermal model of the component or subsystem of the vehicle that associates power usage of the traction electric machine with thermal increase of the component or subsystem, use the thermal model to determine the constant power level.

Example 3: The computer system of any of claims 1-2, the thermal limit being a first thermal limit, wherein the processing circuitry is further configured to: determine the constant power level such that a predetermined second thermal limit lower than the first thermal limit is reached at the end of the route section.

Example 4: The computer system of any of claims 1-3, wherein the processing circuitry is further configured to: determine the constant power level such that the thermal limit is reached at or near the end of the route section.

Example 5: The computer system of any of claims 1-4, wherein the processing circuitry is further configured to: receive topography data of the upcoming route section or multiple consecutive upcoming route sections having different slopes, wherein a constant power level of the traction electric machine is determined for each of the upcoming route sections.

Example 6: The computer system of any of claims 1-5, wherein the processing circuitry is further configured to: set a maximum power limit for the vehicle based on the output message.

Example 7: The computer system of any of claims 1-6, wherein the processing circuitry is further configured to: provide a message to a user interface to inform an operator of constant power level available for the upcoming route section.

Example 8: The computer system of any of claims 1-7, wherein the processing circuitry is further configured to: control the traction electric machine to operate at or below the constant power level throughout at least a majority of the upcoming route section.

Example 9: The computer system of any of claims 1-7, wherein the processing circuitry is further configured to: control the traction electric machine to operate at or below the constant power level throughout the upcoming route section.

Example 10: A vehicle comprising the computer system of any of claims 1-9.

Example 11: A computer-implemented method for controlling a power usage of a traction electric machine of a vehicle, comprising: predicting, by processing circuitry of a computer system, an power profile for an upcoming route section, determining, by the processing circuitry, a thermal buffer of a component or subsystem of the vehicle that is available before a thermal limit is reached, the component or subsystem is associated with a usage restriction due to increased power usage of a driveline of the vehicle, determining, by the processing circuitry, a constant power level of the traction electric machine for the upcoming route section based on the thermal buffer and the predicted power profile for the upcoming route section that allows an increase in temperature of the component or subsystem without exceeding the thermal limit while travelling through the upcoming route section, and providing, by the processing circuitry, an output message indicating the constant power level.

Example 12: The method of claim 11, further comprising: acquiring, by the processing circuitry, a thermal model of the component or subsystem of the vehicle that associates power usage of the traction electric machine with thermal increase of the component or subsystem, use the thermal model to determine the constant power level.

Example 13: The method of any of claims 11-12, the thermal limit being a first thermal limit, wherein the method further comprises: determining, by the processing circuitry, the constant power level such that a predetermined second thermal limit lower than the first thermal limit is reached at or near the end of the route section.

Example 14: The method of any of claims 11-13, further comprising: determining, by the processing circuitry, the constant power level such that the thermal limit is reached at the end of the route section.

Example 15: The method of any of claims 11-14, further comprising: receiving, by the processing circuitry, topography data of the upcoming route section or multiple consecutive upcoming route sections having different slopes, wherein a constant power level of the traction electric machine is determined for each of the upcoming route sections.

Example 16: The method of any of claims 11-15, further comprising: setting, by the processing circuitry, a maximum power limit for the vehicle based on the output message.

Example 17: The method of any of claims 11-16, further comprising: controlling, by the processing circuitry, the traction electric machine to operate at or below the constant power level throughout at least a majority of the upcoming route section.

Example 18: The method of claims 11-17, further comprising: controlling, by the processing circuitry, the traction electric machine to operate at or below the constant power level throughout the upcoming route section.

Example 19: A computer program product comprising program code for performing, when executed by the processing circuitry, the method of any of claims 11-18.

Example 20: A non-transitory computer-readable storage medium comprising instructions, which when executed by the processing circuitry, cause the processing circuitry to perform the method of any of claims 11-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100) for controlling a power usage of a traction electric machine (104) of a vehicle (202), the computer system comprising processing circuitry (102) configured to:
predict a power profile (127) for an upcoming route section (204, 220);
determine a thermal buffer (116) of a component or subsystem (118) of the vehicle (202) that is available before a thermal limit (115) is reached, the component or subsystem is associated with a usage restriction due to increased power usage of a driveline (119) of the vehicle,
determine a constant power level (124) of the traction electric machine for the upcoming route section based on the thermal buffer and the predicted power profile for the upcoming route section that allows an increase in temperature of the component or subsystem without exceeding the thermal limit while travelling through the upcoming route section, and
provide an output message (C) indicating the constant power level.

2. The computer system of claim 1, wherein the processing circuitry is further configured to:
acquire a thermal model (130) of the component or subsystem of the vehicle that associates power usage of the traction electric machine with thermal increase of the component or subsystem,
use the thermal model to determine the constant power level.

3. The computer system of any of claims 1-2, the thermal limit being a first thermal limit, wherein the processing circuitry is further configured to:
determine the constant power level such that a predetermined second thermal limit lower than the first thermal limit is reached at the end of the route section.

4. The computer system of any of claims 1-3, wherein the processing circuitry is further configured to:
determine the constant power level such that the thermal limit is reached at or near the end of the route section.

5. The computer system of any of claims 1-4, wherein the processing circuitry is further configured to:
receive topography data of the upcoming route section, or multiple consecutive upcoming route sections (204, 220) having different slopes, wherein a constant power level of the traction electric machine is determined for each of the upcoming route sections.

6. The computer system of any of claims 1-5, wherein the processing circuitry is further configured to:
set a maximum power limit for the vehicle based on the output message.

7. The computer system of any of claims 1-6, wherein the processing circuitry is further configured to:
provide a message (M) to a user interface (132) to inform an operator of constant power level available for the upcoming route section.

8. The computer system of any of claims 1-7, wherein the processing circuitry is further configured to:
control the traction electric machine to operate at or below the constant power level throughout at least a majority of the upcoming route section.

9. The computer system of any of claims 1-7, wherein the processing circuitry is further configured to:
control the traction electric machine to operate at or below the constant power level throughout the upcoming route section.

10. A vehicle (202) comprising the computer system of any of claims 1-9.

11. A computer-implemented method for controlling a power usage of a traction electric machine of a vehicle, comprising:
predicting (S102), by processing circuitry (102) of a computer system (100), an power profile (127) for an upcoming route section,
determining (S104), by the processing circuitry, a thermal buffer (116) of a component or subsystem (118) of the vehicle that is available before a thermal limit is reached, the component or subsystem is associated with a usage restriction due to increased power usage of a driveline of the vehicle,
determining (S106), by the processing circuitry, a constant power level (124) of the traction electric machine for the upcoming route section based on the thermal buffer and the predicted power profile for the upcoming route section that allows an increase in temperature of the component or subsystem without exceeding the thermal limit while travelling through the upcoming route section, and
providing (S108), by the processing circuitry, an output message (C) indicating the constant power level.

12. The method of any of claim 11, further comprising:
setting (S109), by the processing circuitry, a maximum power limit for the vehicle based on the output message.

13. The method of any of claims 11-12, further comprising:
controlling (S110), by the processing circuitry, the traction electric machine to operate at or below the constant power level throughout at least a majority of the upcoming route section.

14. A computer program product comprising program code for performing, when executed by the processing circuitry, the method of any of claims 11-13.

15. A non-transitory computer-readable storage medium comprising instructions, which when executed by the processing circuitry, cause the processing circuitry to perform the method of any of claims 11-13.
